# EUROPÄISCHE PATENTANMELDUNG

(11) **EP 4 471 917 A1**
(43) Veröffentlichungstag der Anmeldung: **04.12.2024**
(21) Anmeldenummer: 24157278.3
(22) Anmeldetag: 13.02.2024
(51) Int. Cl.: H01M 8/18, H01M 8/0271

(54) **ELEKTRODENANORDNUNG FÜR EINE REDOX-FLUSS-ZELLE UND VERFAHREN ZUM HERSTELLEN EINER ELEKTRODENANORDNUNG FÜR EINE REDOX-FLUSS-ZELLE**

(30) Priorität: 14.02.2023 DE 102023201177
(71) Anmelder: Kermi GmbH, 94447 Plattling (DE)
(72) Erfinder: Greese, Tobias, 80804 München (DE)
(74) Vertreter: Patentanwälte Bressel und Partner mbB

(57) **Zusammenfassung**

Die Erfindung betrifft eine Elektrodenanordnung (1) für eine Redox-Fluss-Zelle, umfassend eine Elektrode (2) aus porösem Elektrodenmaterial mit mindestens einem Einlasskanal (4) mit einem Einlassende (5) und mindestens einem Auslasskanal (6) mit einem Auslassende (7), wobei die Kanäle (4,6) abwechselnd mit Abstand zueinander angeordnet sind, wobei der mindestens eine Einlasskanal (4) an dem Einlassende (5) in die Elektrode (2) hineinführt und wobei der mindestens eine Auslasskanal (6) an dem Auslassende (7) aus der Elektrode (2) herausführt, wobei der mindestens eine Einlasskanal (4) an einem dem Einlassende (5) gegenüberliegenden Ende (8) und der mindestens eine Auslasskanal (6) an einem dem Auslassende (7) gegenüberliegenden Ende (10) durch flüssigkeitsdichte Abschlüsse (9,11) geschlossen sind, und - einen Trägerrahmen (3), der eingerichtet ist zum Halten der Elektrode (2), wobei der Trägerrahmen (3) die Abschlüsse (9,11) ausbildet und/oder bereitstellt und/oder unterstützt. Ferner betrifft die Erfindung ein Verfahren zum Herstellen einer Elektrodenanordnung (1) für eine Redox-Fluss-Zelle.

## Beschreibung

Die Erfindung betrifft eine Elektrodenanordnung für eine Redox-Fluss -Zelle und ein Verfahren zum Herstellen einer Elektrodenanordnung für eine Redox-Fluss -Zelle.

Redox-Fluss-Zellen sind elementare Bestandteile von Redox-Fluss-Batterien. Eine Redox-Fluss-Batterie, welche auch als Flüssigbatterie, Nasszelle oder nach dem Englischen als Redox-Flow-Batterie bezeichnet wird, ist eine Ausführungsform eines Akkumulators. Die Redox-Fluss-Batterie kann zukünftig eine große Bedeutung bei der Speicherung elektrischer Energie aus regenerativen Energiequellen erlangen, da sie fluktuierende Energien wie Sonnen- und/oder Windenergie speichern und bei Bedarf wieder abgeben kann. Ein die Redox-Fluss-Batterie charakterisierendes Merkmal ist, dass die Speicherung der chemischen Energie nicht wie üblich in einem Feststoff, sondern in einem flüssigen Elektrolyten erfolgt.

Der grundsätzliche Aufbau einer Redox-Fluss-Batterie ist beispielsweise aus der DE 10 2012 017 306 A1 bekannt und wird nachfolgend beispielhaft beschrieben. Bei einer Redox-Fluss-Batterie ist die Energie in den Elektrolyten in Form von Metallen, Salzen oder anderen chemischen Verbindungen gespeichert, wobei diese Verbindungen in flüssiger, dispergierter oder gelöster Form vorliegen. Die Elektrolyte werden in externen Tanks gelagert. Zum Laden oder Entladen werden die Elektrolyte durch einen elektrochemischen Reaktor, die Redox-Fluss-Zelle, gepumpt. In dem elektrochemischen Reaktor wird durch Anlegen einer Spannung über einen Stromanschluss an den jeweiligen Elektroden durch Oxidations- und Reduktionsreaktionen beim Laden elektrische Energie in chemische Energie umgewandelt und beim Entladen wieder in elektrische Energie zurück umgewandelt. Der Reaktor umfasst zwei Halbzellen mit jeweils einer Elektrode (Anode und Kathode). Beide Halbzellen sind durch eine Membran voneinander getrennt. Zur Leistungserhöhung einer Energiewandlereinheit können z. B. mehrere solche Einzelzellen zu sogenannten Stacks oder Zellstapeln zusammengefasst werden.

Üblicherweise werden sogenannte Bipolarplatten eingesetzt, die zwei im Zellstapel aneinander liegende Zellen zwar elektrisch verbinden, aber hydraulisch trennen. Auf einer Seite dieser hydraulischen Trennung liegt je eine Elektrode einer Zelle sowie ein die Elektrode umschließender Flussrahmen. In dieser Ausgestaltung besteht die Elektrode aus einem filzartigen, makroskopisch isotropen Carbonfaser-Material und füllt die vom Flussrahmen definierte Kavität in Quaderform in ihrem gesamten Volumen aus. Der Flussrahmen leitet nun den Elektrolyten über Verteilkanäle gleichmäßig der Elektrode zu und ab, sodass der Elektrolyt die Elektrode planparallel entlang der Membran auf gesamter Breite der Elektrode durchströmt. Bei technischen Zellgeometrien mit ausreichend großer aktiver Zellfläche muss die Länge der Elektrode von oben nach unten im Bereich >30 cm liegen, um wirtschaftliche Stack- und damit Leistungsdaten bereitzustellen. Bei Durchströmungslängen von >30 cm und den technisch erforderlichen Elektrolytgeschwindigkeiten von ca. 0.7 cm/s steigen die Druckverluste innerhalb der Batterie auf etwa 1 bar an. Hiermit einher gehen Leistungsverluste des Stacks aufgrund der erforderlichen Pumpleistung (für die Überwindung des Druckabfalls). Aufgrund der langen Wege des Elektrolyten durch Elektrodenmaterial wird ein großer Teil der zur Verfügung stehenden Energieträger (Redox-Spezies) verbraucht und führt besonders gegen Ende des Elektrodenweges zu einer ineffizienten Leistungserzeugung. Die von dem Elektrolyten durchströmte Elektrodenlänge ist daher möglichst kurz zu halten, um die gesamte Effizienz des Zellstapels zu erhöhen; dies widerspricht jedoch der Forderung nach großen Zellflächen und damit Elektrodenlängen.

Anstelle der gleichmäßigen Quaderform der Elektrode wurde vorgeschlagen, im Bereich der Elektrode Strömungskanäle für die Elektrolytflüssigkeit vorzusehen. Eine solche Variante ist in der DE 10 2018 222 728 A1 beschrieben. Beschrieben ist eine Elektrode für chemische Reaktoren, insbesondere für Redox-Fluss-Batterien, mit einer Mehrzahl von Elektrodenstreifen aus porösem Elektrodenmaterial, die nebeneinander mit Abstand zueinander angeordnet sind, mit jeweils einem ersten Ende und einem zweiten Ende, wobei durch den Abstand unmittelbar benachbarter Elektrodenstreifen abwechselnd Einlass- und Auslasskanäle ausgebildet sind, wobei die Einlasskanäle an den ersten Enden der Elektrodenstreifen in die Elektrode hineinführen und wobei die Auslasskanäle an den zweiten Enden der Elektrodenstreifen aus der Elektrode herausführen, und wobei die Einlasskanäle an den zweiten Enden der Elektrodenstreifen und die Auslasskanäle an den ersten Enden der Elektrodenstreifen durch flüssigkeitsdichte Abschlüsse geschlossen sind. Dadurch, dass die Einlasskanäle an den zweiten Enden der Elektrodenstreifen und die Auslasskanäle an den ersten Enden der Elektrodenstreifen durch flüssigkeitsdichte Abschlüsse geschlossen sind, kann Elektrolyt-Flüssigkeit über die gesamte Länge der Einlasskanäle über eine gleichlange Wegstrecke durch das poröse Elektrodenmaterial nur in den linken oder rechten benachbarten Auslasskanal strömen. Durch den Abstand unmittelbar benachbarter Elektrodenstreifen sind die an den Längsseiten der Elektrodenstreifen angeordneten Ein- bzw. Auslasskanäle seitlich begrenzt, während sie in der Höhe bzw. Dicke durch die Membran und durch die Monopolarplatten oder Bipolarplatten begrenzt sind, d. h. die Ein- bzw. Auslasskanäle erstrecken sich über die gesamte Dicke der Elektrodenstreifen, sodass die Elektrolytflüssigkeit über eine gleichlange Wegstrecke durch das poröse Elektrodenmaterial strömt.

Aus A. Bhattarai et al., Vanadium redox flow battery with slotted porous electrodes and automatic rebalancing demonstrated on a 1 kW system level, Applied Energy, Vol. 236, 15. Februar 2019, Seiten 437-443, ist eine Elektrode mit Kanälen im Interdigitated-Flow-Field-(IDFF)-Design bekannt.

Der Erfindung liegt die Aufgabe zu Grunde, eine Elektrodenanordnung für eine Redox-Fluss-Zelle und ein Verfahren zum Herstellen einer Elektrodenanordnung für eine Redox-Fluss-Zelle zu verbessern.

Die Aufgabe wird erfindungsgemäß durch eine Elektrodenanordnung mit den Merkmalen des Patentanspruchs 1 und ein Verfahren mit den Merkmalen des Patentanspruchs 10 gelöst. Vorteilhafte Ausgestaltungen der Erfindung ergeben sich aus den Unteransprüchen.

Es ist einer der Grundgedanken der Erfindung, Enden von in der Elektrode ausgebildeten Einlass- und Auslasskanälen mittels eines Trägerrahmens, der die Elektrode in der Redox-Fluss-Zelle hält, abzuschließen. Die jeweiligen Abschlüsse werden hierbei von dem Trägerrahmen ausgebildet und/oder bereitgestellt. Hierdurch kann insbesondere ein Herstellungsverfahren vereinfacht werden, da die Elektrode in und/oder an dem Trägerrahmen angeordnet wird, die Abschlüsse von bzw. durch den Trägerrahmen ausgebildet werden und die Elektrode beim Anordnen in der Redox-Fluss-Zelle von dem Trägerrahmen gehalten wird.

Insbesondere wird eine Elektrodenanordnung für eine Redox-Fluss-Zelle geschaffen, umfassend eine Elektrode aus porösem Elektrodenmaterial mit mindestens einem Einlasskanal mit einem Einlassende und mindestens einem Auslasskanal mit einem Auslassende, wobei die Kanäle abwechselnd mit Abstand zueinander angeordnet sind, wobei der mindestens eine Einlasskanal an dem Einlassende in die Elektrode hineinführt und wobei der mindestens eine Auslasskanal an dem Auslassende aus der Elektrode herausführt, wobei der mindestens eine Einlasskanal an einem dem Einlassende gegenüberliegenden Ende und der mindestens eine Auslasskanal an einem dem Auslassende gegenüberliegenden Ende durch flüssigkeitsdichte Abschlüsse geschlossen sind, und einen Trägerrahmen, der eingerichtet ist zum Halten der Elektrode, wobei der Trägerrahmen die Abschlüsse ausbildet und/oder bereitstellt und/oder unterstützt.

Ferner wird insbesondere ein Verfahren zum Herstellen einer Elektrodenanordnung für eine Redox-Fluss-Zelle zur Verfügung gestellt, wobei eine Elektrode aus porösem Elektrodenmaterial mit mindestens einem Einlasskanal mit einem Einlassende und mindestens einem Auslasskanal mit einem Auslassende ausgebildet oder bereitgestellt wird, derart, dass die Kanäle abwechselnd mit Abstand zueinander angeordnet sind und der mindestens eine Einlasskanal an dem Einlassende in die Elektrode hineinführt und der mindestens eine Auslasskanal an dem Auslassende aus der Elektrode herausführt, wobei der mindestens eine Einlasskanal an einem dem Einlassende gegenüberliegenden Ende und der mindestens eine Auslasskanal an einem dem Auslassende gegenüberliegenden Ende durch flüssigkeitsdichte Abschlüsse verschlossen werden, wobei ein Trägerrahmen bereitgestellt wird, wobei der Trägerrahmen an der Elektrode angeordnet und/oder mit dieser verbunden wird, derart, dass der Trägerrahmen die Abschlüsse ausbildet und/oder bereitstellt und/oder unterstützt.

Die Elektrodenanordnung und das Verfahren erlauben insbesondere eine Vereinfachung der Herstellung der Redox-Fluss-Zelle. Insbesondere wird das Einsetzen und/oder im Hinblick auf eine Position präzise Anordnen und/oder Ausrichten und/oder Informhaltung der Elektrode in die Redox-Fluss-Zelle durch die beschriebene Elektrodenanordnung erleichtert. Die in dieser Offenbarung beschriebene Elektrodenanordnung stellt insbesondere sicher, dass die Elektrode und insbesondere die Kanäle ihre Form, Ausrichtung und Bemaßung bei einem Einbau oder einem Betrieb in der Redox-Fluss-Zelle präzise beibehalten. Ein weiterer Vorteil der Elektrodenanordnung ist, dass der Trägerrahmen im Bereich von vor- und rücklaufenden Verteilkanälen der Elektrolytflüssigkeit eine mechanische Unterstützung für eine Membran der Zelle bereitstellen kann. In herkömmlicher Bauart wird diese Unterstützung der Membran in diesem Bereich mittels eines Flussrahmens bewirkt, der üblicherweise aus einem einzelnen Bauteil besteht, das aufgrund seiner dreidimensionalen Struktur mittels Spritzguss gefertigt werden muss. Der Trägerrahmen kann hingegen deutlich flacher ausgebildet sein, sodass dieser insbesondere als zweidimensionales Bauteil hergestellt werden kann, sodass Einsparungen beim Herstellen (Aufwand, Zeit und Kosten) erzielt werden können.

Die Elektrode kann zum Bereitstellen des mindestens einen Einlasskanals und des mindestens einen Auslasskanals insbesondere im Interdigitated-Flow-Field-(IDFF)-Design oder in Form von nebeneinander angeordneten Streifen (Interdigitated-Blocked-Elektrode-(IDBE)-Design, wie z.B. in der DE 10 2018 222 728 A1 beschrieben) ausgebildet sein. Grundsätzlich sind jedoch auch andere Ausgestaltungen möglich. In einigen Ausgestaltungen (z.B. IDFF) ist die Elektrode insbesondere einstückig ausgebildet. Die Elektrodenstreifen oder die einstückige Elektrode mit den Einlass- und Auslasskanälen können beispielsweise mittels Stanzen oder mit Hilfe von einer Bandsäge oder mit Hilfe von einem Bandmesser oder mit Hilfe von einem Laser oder mit Hilfe von einer Wasserstrahlsäge oder mit Hilfe von einem Fräser hergestellt werden. Die Elektrode ist insbesondere flach ausgebildet.

Die Abschlüsse bilden insbesondere eine Barriere oder Blockade für die Elektrolytflüssigkeit. Die Abschlüsse sind insbesondere flüssigkeitsdicht ausgebildet. Die Abschlüsse sind bzw. werden durch den Trägerrahmen ausgebildet und/oder bereitgestellt und/oder unterstützt, das heißt, der Trägerrahmen bewirkt oder unterstützt insbesondere den jeweiligen Abschluss und die Barriere oder Blockade für die Elektrolytflüssigkeit. Hierbei kann der Trägerrahmen insbesondere mit der Elektrode oder Teilen hiervon zusammenwirken und/oder diesen unterstützen, um den Abschluss auszubilden und/oder bereitzustellen.

Die Elektrodenanordnung ist bzw. wird in der Redox-Fluss-Zelle insbesondere zwischen einer Monopolar- oder Bipolarplatte und einer Membran der Zelle angeordnet. Hierbei umfasst eine Redox-Fluss-Zelle insbesondere auf beiden Seiten der Membran, das heißt für beide Polaritäten, eine solche Elektrodenanordnung. Handelt es sich um einen Zellstapel, so können weitere Elektrodenanordnungen vorgesehen sein.

Die Elektrode ist insbesondere eine poröse Elektrode, das heißt, die Elektrode ist aus gesintertem oder geschäumtem oder faserartigem Metall und/oder geschäumtem oder faserartigem Kohlenstoff, wie zum Beispiel Graphitfilz oder Carbonpapier oder Carbongewebe ausgebildet und/oder umfasst Graphitfilz, Carbonpapier oder Carbongewebe.

Der Trägerrahmen kann beispielsweise aus Polyvinylchlorid (PVC), insbesondere Hart-PVC (PVC-U, unplasticized PVC), ausgebildet sein. Der Trägerrahmen weist insbesondere eine Dicke im Bereich von 0,02 bis 0,3 mm, bevorzugt von < 0,2 mm auf. Grundsätzlich können aber auch andere geeignete Kunststoffe, wie beispielsweise Polyethylen (PE) oder Polypropylen (PP), verwendet werden.

Es kann vorgesehen sein, dass zwischen der Elektrode und der Membran der Redox-Fluss-Zelle ein zusätzliches Kohlenstoff- oder Glasfasergewebe oder -gelege oder -gitter (Trägerlage) angeordnet ist oder angeordnet wird. Hierdurch kann die Membran im Bereich der Kanäle gestützt werden, sodass eine mechanische Belastung der Membran verringert werden kann. Ferner kann mittels einer solchen Trägerlage verhindert werden, dass sich die Membran, die in der Regel sehr elastisch und biegsam ist, in einen Kanal hineinfaltet und hierdurch in diesem Kanal einen Elektrolytfluss behindert.

In einer Ausführungsform ist vorgesehen, dass der Trägerrahmen eine Kunststofffolie umfasst, wobei die Kunststofffolie die Abschlüsse zumindest teilweise ausbildet. Hierdurch kann der Trägerrahmen besonders flach ausgebildet sein oder ausgebildet werden. Insbesondere besteht der Trägerrahmen ausschließlich aus der Kunststofffolie. Ferner kann eine Folie besonders einfach hergestellt und strukturiert werden. Die Folie kann beispielsweise aus Polyvinylchlorid (PVU), insbesondere Hart-PVC (PVC-U, unplasticized PVC), ausgebildet sein. Die Kunststofffolie weist insbesondere eine Dicke im Bereich von 0,02 bis 0,3 mm, bevorzugt von < 0,2 mm auf. Grundsätzlich können aber auch andere geeignete Kunststoffe, wie beispielsweise Polyethylen (PE) oder Polypropylen (PP), verwendet werden.

In einer Ausführungsform des Verfahrens ist entsprechend vorgesehen, dass das Bereitstellen des Trägerrahmens ein Bereitstellen einer Kunststofffolie umfasst, mittels derer die Abschlüsse zumindest teilweise ausgebildet werden.

In einer weiterbildenden Ausführungsform des Verfahrens ist vorgesehen, dass das Bereitstellen der Kunststofffolie ein Stanzen der Kunststofffolie umfasst. Hierdurch kann die Kunststofffolie mit geringem Aufwand hergestellt werden. Insbesondere können das Herstellen des Trägerrahmens bzw. die Strukturierung der Kunststofffolie hierdurch in einem einzigen Schritt erfolgen.

In einer weiterbildenden Ausführungsform des Verfahrens ist vorgesehen, dass das Bereitstellen der Kunststofffolie ein Lasern der Kunststofffolie umfasst. Hierdurch kann die Kunststofffolie mit geringem Aufwand hergestellt werden. Insbesondere können das Herstellen des Trägerrahmens bzw. die Strukturierung der Kunststofffolie hierdurch in einem einzigen Schritt erfolgen.

In einer Ausführungsform ist vorgesehen, dass die Kunststofffolie zum Ausbilden der Abschlüsse im Bereich der jeweiligen Abschlüsse und/oder benachbart hierzu an der Elektrode anliegt und/oder die Elektrode dort zumindest einseitig umgreift. Hierdurch kann der jeweilige Abschluss zumindest teilweise durch das Folienmaterial selbst ausgebildet werden. Insbesondere kann das Folienmaterial eine Barriere oder Blockade für einen Elektrolytfluss bilden und hierdurch die Abschlüsse zumindest teilweise ausbilden. Die Folie wird hierzu insbesondere derart strukturiert, dass diese an einer schmalen Seite der (flachen bzw. ebenen) Elektrode anliegt und einen Elektrolytfluss dort und im Bereich der jeweils der Einlassöffnung oder der Auslassöffnung gegenüberliegenden Enden der Kanäle verhindert oder zumindest stark reduziert. Ferner kann die Kunststofffolie derart strukturiert sein, dass die Kunststofffolie insbesondere einen Rand der Elektrode im Bereich der jeweiligen Abschlüsse und/oder benachbart hierzu zumindest einseitig umgreift. Zum Umgreifen liegt die Kunststofffolie dort insbesondere an einer ebenen Seite der Elektrode an. Dies wird insbesondere erreicht, indem in der Folie eine Stufe ausgebildet ist oder ausgebildet wird und die Elektrode an oder in der Stufe angeordnet wird.

In einer Ausführungsform des Verfahrens ist entsprechend vorgesehen, dass die Kunststofffolie im Bereich der jeweiligen Abschlüsse und/oder benachbart hierzu an die Elektrode angelegt wird und/oder wobei die Kunststofffolie dort die Elektrode zumindest einseitig umgreifend angeordnet wird.

In einer Ausführungsform ist vorgesehen, dass die Kunststofffolie für jeden der Abschlüsse jeweils mindestens einen Perforationsabschnitt aufweist. Hierdurch kann im Bereich der Abschlüsse und/oder benachbart hierzu auf einfache Weise ein abgewinkelter Bereich oder eine Stufe in der Kunststofffolie ausgebildet werden. Ein Perforationsabschnitt kann insbesondere eine Perforationslinie sein. Es kann insbesondere vorgesehen sein, dass die Kunststofffolie entlang des mindestens einen Perforationsabschnittes gefalzt wird, um die Kunststofffolie dort abzuwinkeln. Insbesondere kann ein derartiger Falz im rechten Winkel (-90°) ausgebildet sein bzw. ausgebildet werden. Insbesondere kann die Kunststofffolie für jeden der Bereiche zwei Perforationsabschnitte, insbesondere in Form von zueinander parallel verlaufenden Perforationslinien, aufweisen, sodass durch zweimaliges Abwinkeln eine Stufe in der Kunststofffolie ausgebildet werden kann.

In einer Ausführungsform des Verfahrens ist entsprechend vorgesehen, dass das Bereitstellen der Kunststofffolie ein Einbringen von jeweils mindestens einem Perforationsabschnitt für jeden der Abschlüsse umfasst. Das Einbringen der Perforationsabschnitte kann zusammen mit dem Stanzen oder dem Lasern erfolgen.

In einer Ausführungsform ist vorgesehen, dass der Trägerrahmen im Bereich des jeweiligen Abschlusses und/oder benachbart hierzu mit der Elektrode verklebt und/oder stoffschlüssig verbunden ist. Hierdurch kann sowohl ein flüssigkeitsdichter Abschluss ausgebildet werden als auch eine sichere, insbesondere stoffschlüssige, mechanische Verbindung zwischen dem Trägerrahmen und der Elektrode ausgebildet werden. Insbesondere ist die Kunststofffolie im Bereich des jeweiligen Abschlusses und/oder benachbart hierzu mit der Elektrode verklebt. Es kann vorgesehen sein, dass der Kleber auf Basis eines Materials des Trägerrahmens gewählt ist oder gewählt wird. Ist der Trägerrahmen, insbesondere die Kunststofffolie, aus PVC-U, so kann ein PCV-U-Kleber, beispielsweise auf Basis des PVC-Lösemittels Tetrahydrofuran (THF), Methylethylketon (MEK) oder eines anderen geeigneten Lösemittels, verwendet werden. Durch das Verkleben sind bzw. werden sowohl die mechanische Verbindung zwischen der Elektrode und dem Trägerrahmen als auch die Abschlüsse ausgebildet.

In einer Ausführungsform des Verfahrens ist entsprechend vorgesehen, dass der Trägerrahmen zum Ausbilden der Abschlüsse im Bereich der Abschlüsse und/oder benachbart hierzu mit der Elektrode verklebt und/oder stoffschlüssig verbunden wird. Insbesondere kann hierzu vorgesehen sein, dass das Elektrodenmaterial im Bereich der Abschlüsse durch den Kleber angelöst wird und hierdurch eine stoffschlüssige Verbindung mit dem Trägerrahmen, insbesondere mit der Kunststofffolie, ausgebildet wird.

In einer Ausführungsform ist vorgesehen, dass der Trägerrahmen in den Bereichen des mindestens einen Einlasskanals und des mindestens einen Auslasskanals Stege mit in die Kanäle hineinragenden Abstandshaltern aufweist. Hierdurch kann während des Betriebs der Redox-Fluss-Zelle eine konstante Kanalbreite sichergestellt werden, um den dauerhaft auftretenden Scherkräften des durchströmenden Elektrolyten, die zu einem Verrutschen von Teilen der Elektrode führen können, entgegenzuwirken. Derartige Abstandshalter können beispielsweise mittels additiver Fertigungsverfahren, wie beispielsweise 3D-Druck, in den mindestens einen Einlass- bzw. Auslasskanal eingebracht werden.

In einer Ausführungsform des Verfahrens ist entsprechend vorgesehen, dass der Trägerrahmen derart bereitgestellt wird, dass der Trägerrahmen in den Bereichen des mindestens einen Einlasskanals und des mindestens einen Auslasskanals Stege mit in die Kanäle hineinragenden Abstandshaltern aufweist, wobei die Abstandshalter in den Kanälen angeordnet werden.

In einer Ausführungsform ist vorgesehen, dass die Stege und die Abstandshalter durch Abschnitte der Kunststofffolie ausgebildet sind. Hierdurch kann eine besonders einfache Herstellung der Abstandshalter erfolgen. Aufwand und Kosten können weiter reduziert werden.

In einer Ausführungsform des Verfahrens ist entsprechend vorgesehen, dass das Bereitstellen der Kunststofffolie ein Stanzen der Stege und von Abschnitten zum Ausbilden der Abstandshalter umfasst.

In einer Ausführungsform ist vorgesehen, dass die Kunststofffolie zum Ausbilden der Abstandshalter jeweils mindestens einen Perforationsabschnitt aufweist. Hierdurch kann die Folie zum Ausbilden der Abstandshalter entlang der Perforationsabschnitte abgewinkelt werden, sodass die abgewinkelten Abschnitte in den jeweiligen Kanal hineinragen und als mechanische Barriere gegen ein Verrutschen der Elektrodenteile wirken. Die Perforationsabschnitte sind insbesondere als Perforationslinien ausgebildet.

In einer Ausführungsform des Verfahrens ist entsprechend vorgesehen, dass das Bereitstellen der Kunststofffolie ein Einbringen von jeweils mindestens einem Perforationsabschnitt für jeden der Abstandshalter umfasst. Das Einbringen der Perforationsabschnitte kann zusammen mit dem Stanzen oder dem Lasern erfolgen.

Es wird ferner auch eine Redox-Fluss-Zelle geschaffen, umfassend mindestens eine Elektrodenanordnung nach einer der in dieser Offenbarung beschriebenen Ausführungsformen. Die Redox-Fluss-Zelle kann insbesondere Teil eines Zellstapels (Stacks) von mehreren Zellen sein, die zu einer Energiewandlereinheit und/oder Redox-Fluss-Batterie zusammengefasst sind. Neben der in dieser Offenbarung beschriebenen Elektrodenanordnung umfasst die Redox-Fluss-Zelle ferner insbesondere Monopolar- oder Bipolarplatten für jede Polarität, Flussrahmen für den Zu- und Abtransport der Elektrolytflüssigkeit zu und von der Elektrode sowie eine Membran.

Nachfolgend wird die Erfindung anhand bevorzugter Ausführungsbeispiele unter Bezugnahme auf die Figuren näher erläutert. Hierbei zeigen:
- Fig. 1: eine schematische Darstellung einer Ausführungsform der Elektrodenanordnung;
- Fig. 2a, b: schematische Darstellungen zur Verdeutlichung einer Anordnung der Elektrodenanordnung innerhalb einer Redox-Fluss-Zelle;
- Fig. 3: eine schematische Darstellung eines Trägerrahmens zur Verdeutlichung von Ausführungsformen der Elektrodenanordnung;
- Fig. 4: eine schematische Darstellung eines Trägerrahmens zur Verdeutlichung von weiteren Ausführungsformen der Elektrodenanordnung;
- Fig. 5: eine schematische Darstellung einer Variante einer Elektrode zur Verdeutlichung von weiteren Ausführungsformen der Elektrodenanordnung;
- Fig. 6: eine schematische Darstellung einer anderen Variante einer Elektrode zur Verdeutlichung von weiteren Ausführungsformen der Elektrodenanordnung;
- Fig. 7: ein schematisches Ablaufdiagramm zur Verdeutlichung von Ausführungsformen des Verfahrens zum Herstellen einer Elektrodenanordnung für eine Redox-Fluss-Zelle.

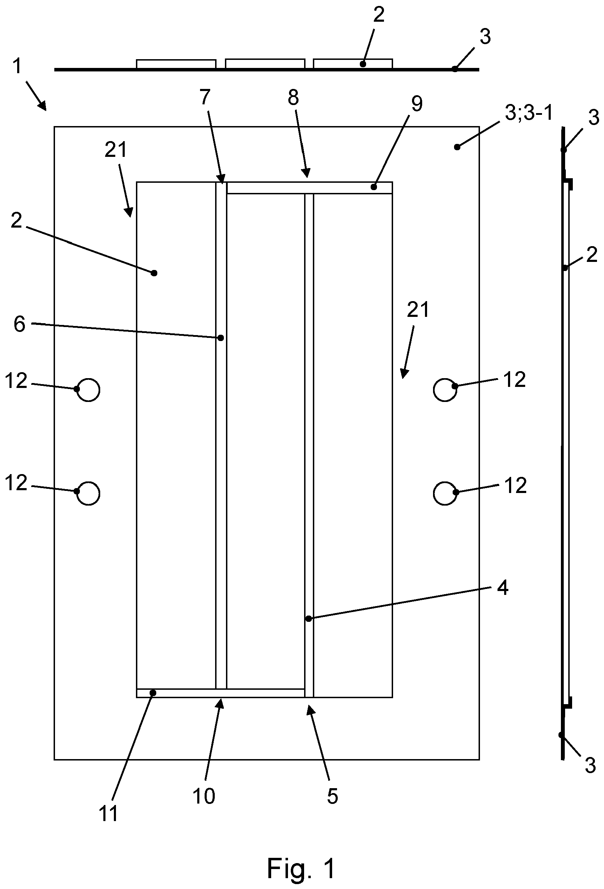

Die Fig. 1 zeigt eine schematische Darstellung einer Ausführungsform der Elektrodenanordnung 1. Hierbei sind nebeneinander eine Draufsicht auf eine Ebene oder ebene Seite der Elektrodenanordnung 1 sowie zwei Seitenansichten auf schmale Seiten der Ebene gezeigt. Die Elektrodenanordnung 1 umfasst eine Elektrode 2 und einen Trägerrahmen 3.

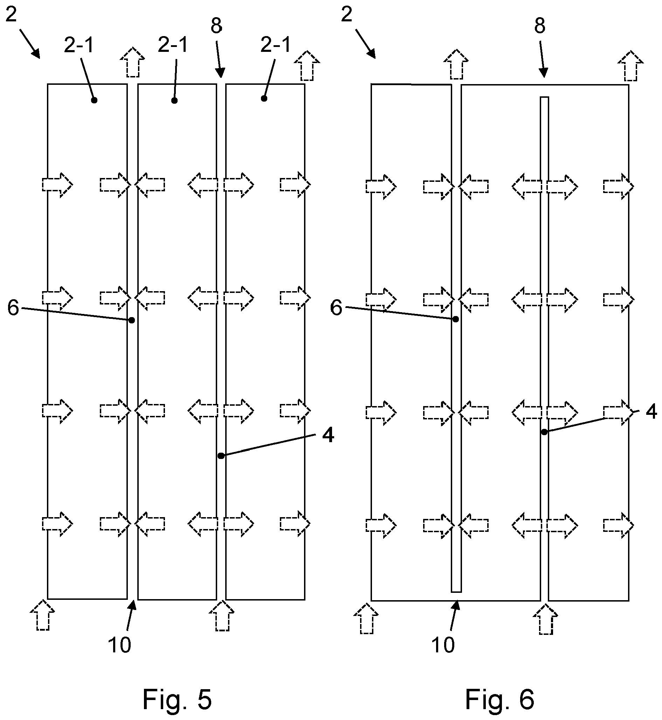

Die Elektrode 2 umfasst ein poröses Elektrodenmaterial, beispielsweise ein Graphitfilz. Die Elektrode 2 weist mindestens einen parallel zur Ebene verlaufenden Einlasskanal 4 mit einem Einlassende 5 und mindestens einen parallel zur Ebene verlaufenden Auslasskanal 6 mit einem Auslassende 7 auf. Die Kanäle 4, 6 sind abwechselnd mit Abstand zueinander angeordnet. Die Elektrode 2 kann hierbei aus mehreren Elektrodenstreifen gebildet sein (vgl. Fig. 5) oder einstückig in Form einer mäanderförmigen Struktur (vgl. Fig. 6). Die Elektrode kann beispielsweise mittels Stanzen oder mittels Lasern oder mittels Bandsägen hergestellt werden.

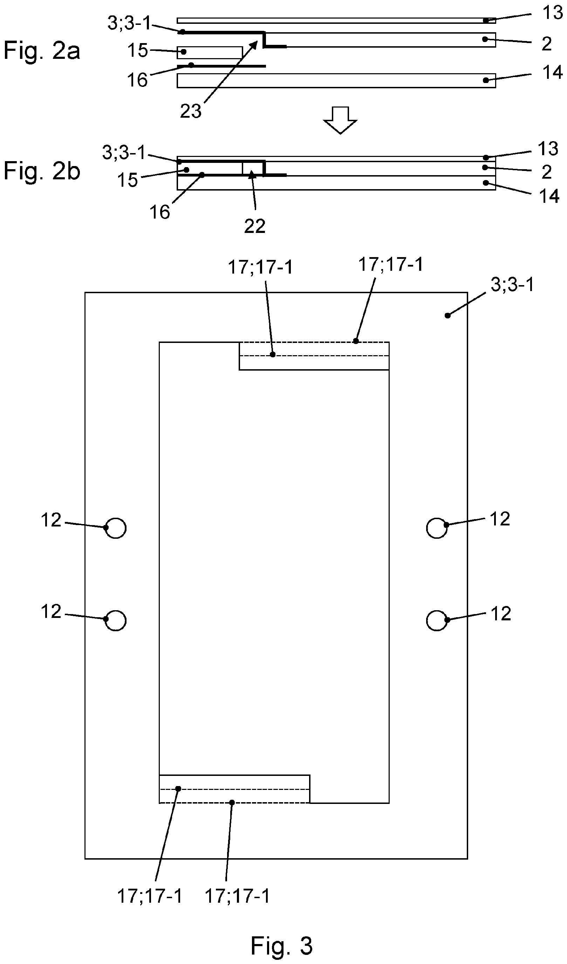

Der mindestens eine Einlasskanal 4 führt an dem Einlassende 5 in die Elektrode 2 hinein und der mindestens eine Auslasskanal 6 führt an dem Auslassende 7 aus der Elektrode 2 heraus. Eine Elektrolytflüssigkeit bewegt sich hierbei in der Ebene, das heißt mit Bezug auf die gezeigte Fig. 1 im Wesentlichen parallel zur Papier- oder Bildschirmebene. Die Elektrolytflüssigkeit wird insbesondere mittels zwischen einem Flussrahmen 15 (Figuren 2a und 2b) und der Elektrodenanordnung 1 ausgebildeten Verteilkanälen 22 (Fig. 2b) an die Elektrode 2, insbesondere die Kanäle 4, 6, heran- bzw. wieder abgeführt. Die Verteilkanäle 22 (Fig. 2b) sind hierbei insbesondere um die gesamte Elektrode 2 herum ausgebildet, sodass die Elektrolytflüssigkeit nicht nur durch die Kanäle 4, 6, sondern auch an Außenseiten 21 der Elektrode 2, zugeführt und abgeführt wird (vgl. Figuren 5 und 6). Die Elektrode 2 ist insbesondere anliegend an und damit eingefasst durch den Trägerrahmen 3 zumindest an einem dem Einlassende 5 gegenüberliegenden Ende 8 und einem dem Auslassende 7 gegenüberliegenden Ende 10, sowie durch den Flussrahmen 15 an ihren Stirnseiten 23 (Fig. 2a), die auf Höhe der Enden 8 und 10 liegen. Durch die Kanäle 4, 6 kann sich eine Elektrolytflüssigkeit nahezu druckverlustfrei fortbewegen, erst bei einer Durchquerung des Elektrodenmaterials von einem Einlasskanal 4 zu einem Auslasskanal 6 kommt es zu einem Druckabfall. Gegenüber einer vollflächig ausgebildeten Elektrode erlaubt die gezeigte Strukturierung in Form von Einlass- und Auslasskanälen 4, 6 insbesondere eine Reduzierung des hydraulischen Druckabfalls über die gesamte Elektrode hinweg.

Der mindestens eine Einlasskanal 4 ist an einem dem Einlassende 5 gegenüberliegenden Ende 8 durch einen flüssigkeitsdichten Abschluss 9 geschlossen. Der mindestens eine Auslasskanal 6 ist an einem dem Auslassende 7 gegenüberliegenden Ende 10 ebenfalls durch einen flüssigkeitsdichten Abschluss 11 geschlossen.

Der Trägerrahmen 3 ist zum Halten der Elektrode 2 eingerichtet, wobei der Trägerrahmen 3 die Abschlüsse 9, 11 ausbildet und/oder bereitstellt.

Der Trägerrahmen 3 wird zusammen mit der gehaltenen Elektrode 2 in einer Redox-Fluss-Zelle zwischen einer Monopolar- oder Bipolarplatte und einer Membran angeordnet. Um den Trägerrahmen 3 zu fixieren, kann der Trägerrahmen 3 Löcher 12 aufweisen, welche den Verteilkanal bilden (engl. "Manifold"), durch den der Elektrolyt in zur Papier- oder Bildschirmebene senkrechter Richtung geführt werden kann, um an jede positive bzw. negative Halbzelle des Zellstapels zu fließen.

Eine Anordnung des Trägerrahmens 3 und der Elektrode 2 innerhalb der Redox-Fluss-Zelle ist beispielshaft in den Figuren 2a und 2b verdeutlicht. Der Trägerrahmen 3 mit der gehaltenen Elektrode 2 wird bzw. ist zwischen der Membran 13 und der Monopolar- oder Bipolarplatte 14 angeordnet. An Außenseiten (hier ist nur eine Seite gezeigt) liegt der Trägerrahmen 3 hierbei an einem Flussrahmen 15 auf. Durch diese Anordnung wird ein Verteilkanal 22 zwischen der Elektrode 2 und dem Flussrahmen 15 gebildet, der einer Zu- bzw. Abführung der Elektrolytflüssigkeit zur bzw. von der Elektrode 2 aus bzw. zu den Tanks dient. Derartige Verteilkanäle 22 für die Zuführung und die Abführung sind insbesondere um alle Außenseiten der Elektrode 2 ausgebildet, abgesehen von den äußeren Stirnseiten 23 (Fig. 2a) der Elektrode 2, welche an den Flussrahmen 15 anliegen. Zwischen Monopolar- oder Bipolarplatte 14 und dem Flussrahmen 15 ist eine Dichtung 16 vorgesehen. Für die andere Polarität ist auf der anderen Seite der Membran 13 insbesondere eine gleichartige, aber gespiegelte, Anordnung vorgesehen.

Es kann vorgesehen sein, dass der Trägerrahmen 3 eine Kunststofffolie 3-1 umfasst, wobei die Kunststofffolie 3-1 die Abschlüsse 9,11 zumindest teilweise ausbildet. Die Kunststofffolie kann beispielsweise Hart-PVC (PVC-U) umfassen.

Es kann vorgesehen sein, dass die Kunststofffolie 3-1 zum Ausbilden der Abschlüsse 9,11 im Bereich der jeweiligen Abschlüsse 9,11 und/oder benachbart hierzu an der Elektrode 2 anliegt und/oder die Elektrode 2 dort zumindest einseitig umgreift. Dies ist schematisch in der Fig. 1 und den Figuren 2a und 2b gezeigt. Die Kunststofffolie 3-1 ist dort, wo diese mit der Elektrode 2 in Kontakt tritt, stufenartig (insbesondere im rechten Winkel) zweimal abgewinkelt. Im Bereich der Stufe liegt die Kunststofffolie 3-1 an einer schmalen Seite und an einer der Monopolar- oder Bipolarplatte 14 zugewandten Seite der Elektrode 2 an. Die Kunststofffolie 3-1 umgreift die Elektrode 2 hierdurch im Bereich der jeweiligen Abschlüsse 9, 11. Hierdurch kann die Kunststofffolie 3-1 die Elektrode 2 halten und einen Elektrolytfluss in diesem Bereich verringern oder blockieren.

Es kann vorgesehen sein, dass die Kunststofffolie 3-1 für jeden der Abschlüsse 9, 11 jeweils mindestens einen Perforationsabschnitt 17 aufweist. Hierdurch kann beim Herstellen das Abwinkeln der Kunststofffolie 3-1 vereinfacht bzw. unterstützt werden. Dies ist schematisch in der Fig. 3 gezeigt. Die Kunststofffolie 3-1 kann beispielsweise mittels Stanzen hergestellt werden. Beim Stanzen können gleichzeitig Perforationsabschnitte 17 eingebracht werden. Beispielhaft sind für jeden der Abschlüsse 9, 11 jeweils zwei Perforationsabschnitte 17 in Form von zueinander parallel verlaufenden Perforationslinien 17-1 vorgesehen. Entlang dieser Perforationslinien 17-1 kann die Kunststofffolie 3-1 gefalzt werden und hierdurch stufenartig abgewinkelt werden.

Es kann vorgesehen sein, dass der Trägerrahmen 3 im Bereich des jeweiligen Abschlusses 9, 11 und/oder benachbart hierzu mit der Elektrode 2 verklebt und/oder stoffschlüssig verbunden ist. Insbesondere kann die Kunststofffolie 3-1 mit der Elektrode 2 verklebt sein. Umfasst die Kunststofffolie 3-1 beispielsweise Hart-PVC (PVC-U) oder besteht aus solchem, so kann ein PVC-U-Kleber verwendet werden, der das Hart-PVC mittels eines Lösungsmittels anlöst und hierdurch eine stoffschlüssige Verbindung zwischen dem Trägerrahmen 3 bzw. der Kunststofffolie 3-1 und der Elektrode 2 ausbildet. Ferner können hierdurch auch Löcher der Perforationsabschnitte 17 wieder verschlossen werden.

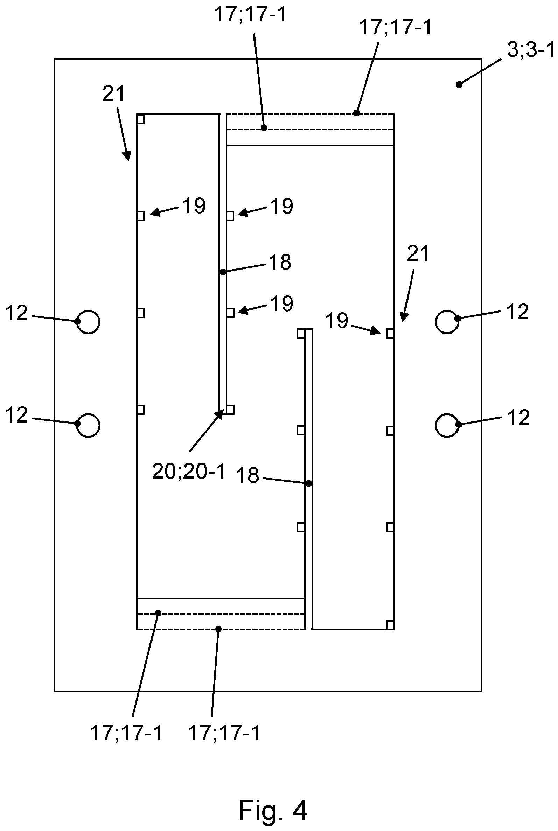

Es kann vorgesehen sein, dass der Trägerrahmen 3 in den Bereichen der Einlasskanäle 4 und Auslasskanäle 6 (Fig. 1) Stege 18 (Fig. 4) mit in die Kanäle 4, 6 (Fig. 1) hineinragenden Abstandshaltern 19 aufweist. Diese Ausführungsform ist schematisch in der Fig. 4 anhand der Kunststofffolie 3-1 gezeigt, wobei der besseren Sichtbarkeit halber keine Elektrode gezeigt ist. Es kann hierbei insbesondere vorgesehen sein, dass die Stege 18 und die Abstandshalter 19 durch Abschnitte der Kunststofffolie 3-1 ausgebildet sind (der Übersichtlichkeit halber sind nicht alle Abstandshalter 19 mit einem eigenen Bezugszeichen gekennzeichnet). Die Stege 18 und Abstandshalter 19 können beispielsweise beim Stanzen der Kunststofffolie 3-1 ausgebildet werden.

Insbesondere kann vorgesehen sein, dass die Kunststofffolie 3-1 zum Ausbilden der Abstandshalter 19 jeweils Perforationsabschnitte 20 aufweist (der Übersichtlichkeit halber ist nur ein Perforationsabschnitt 20 mit einem eigenen Bezugszeichen gekennzeichnet). Die Perforationsabschnitte 20 haben insbesondere die Form von Perforationslinien 20-1. Die Abschnitte der Kunststofffolie 3-1 werden entlang der Perforationsabschnitte 20 bzw. Perforationslinien 20-1 abgewinkelt, insbesondere rechtwinklig gefalzt, und ragen dann in die Kanäle 4, 6 (Fig. 1) hinein. In der in der Fig. 4 gezeigten Ausführungsform weisen die Stege 18 nur auf einer Seite Abstandshalter 19 auf. Grundsätzlich können die Stege 18 auf beiden Seiten, das heißt, für beide Seitenwände der Kanäle 4, 6 (Fig. 1), Abstandshalter 19 aufweisen. Es kann ferner vorgesehen sein, dass auch an Außenseiten 21, dort wo sich am äußeren Rand der Elektrode 2 (Fig. 1) äußere Kanäle befinden, Abstandshalter 19 ausgebildet sind, wie dies in der Fig. 4 schematisch gezeigt ist. Die Abstandshalter 19 können insbesondere gleichmäßig bzw. gleichverteilt angeordnet sein.

Die Fig. 5 zeigt eine schematische Darstellung zur Verdeutlichung einer Ausführungsform der Elektrode 2. Die Elektrode 2 dieser Ausführungsform umfasst eine Mehrzahl von Elektrodenstreifen 2-1, welche mit Abstand zueinander angeordnet sind oder angeordnet werden. Die Elektrodenstreifen 2-1 werden in dem Trägerrahmen in der voranstehenden Art und Weise angeordnet und von dem Trägerrahmen gehalten. Die Struktur der gezeigten Ausführungsform entspricht insbesondere einem Interdigitated Blocked Elektrode (IDBE)-Design. Ferner veranschaulicht die Fig. 5 beispielhaft einen Elektrolytfluss durch die Elektrode 2. Grundsätzlich kann eine Flussrichtung hierbei auch umgekehrt sein.

Es kann auch vorgesehen sein, dass die Elektroden 2 in den gezeigten Ausführungsformen eine größere Anzahl an Einlasskanälen 4 und Auslasskanälen 6 aufweisen.

Die Fig. 6 zeigt eine schematische Darstellung zur Verdeutlichung einer anderen Ausführungsform der Elektrode 2. Die Elektrode 2 dieser Ausführungsform ist einstückig ausgebildet und weist eine mäanderartige Struktur auf. Im Gegensatz zu der in der Fig. 5 gezeigten Ausführungsform sind die Kanäle 4, 6 in der Elektrode 2 an ihren gegenüberliegenden Enden 8, 10 durch Elektrodenmaterial verschlossen. Zusätzlich werden diese Bereiche mittels der Abschlüsse 9, 11 (Fig. 1) abgedichtet. Die Elektrode 2 wird in dem Trägerrahmen in der voranstehenden Art und Weise angeordnet und von dem Trägerrahmen gehalten. Die Struktur der gezeigten Ausführungsform entspricht insbesondere einem Interdigitated Flow Field (IDFF)-Design.

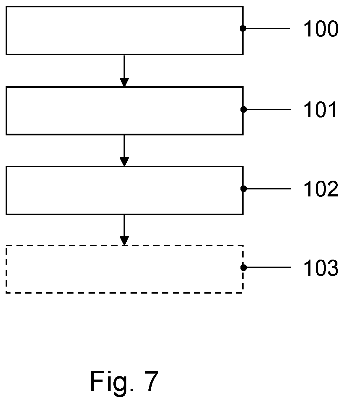

Die Fig. 7 zeigt ein schematisches Ablaufdiagramm einer Ausführungsform des Verfahrens zum Herstellen einer Elektrodenanordnung für eine Redox-Fluss-Zelle.

In einem Verfahrensschritt 100 ist vorgesehen, dass eine Elektrode aus porösem Elektrodenmaterial mit mindestens einem Einlasskanal mit einem Einlassende und mindestens einem Auslasskanal mit einem Auslassende ausgebildet oder bereitgestellt wird. Das Bereitstellen erfolgt hierbei derart, dass die Kanäle abwechselnd mit Abstand zueinander angeordnet sind und der mindestens eine Einlasskanal an dem Einlassende in die Elektrode hineinführt und der mindestens eine Auslasskanal an dem Auslassende aus der Elektrode herausführt. Es kann hierbei vorgesehen sein, dass zum Bereitstellen der Elektrode Elektrodenstreifen bereitgestellt werden, die in einem Abstand zueinander angeordnet werden (Fig. 5). Alternativ kann vorgesehen sein, dass Kanäle in eine flache vollflächige Elektrode hineingeschnitten oder hineingestanzt werden, wobei hierbei eine mäanderartige Strukturierung der Elektrode vorgenommen wird, bei der die Elektrode einstückig bleibt (Fig. 6).

In einem Verfahrensschritt 101 wird ein Trägerrahmen bereitgestellt.

In einem Verfahrensschritt 102 werden der mindestens eine Einlasskanal an einem dem Einlassende gegenüberliegenden Ende und der mindestens eine Auslasskanal an einem dem Auslassende gegenüberliegenden Ende durch flüssigkeitsdichte Abschlüsse verschlossen. Der Trägerrahmen wird hierzu an der Elektrode angeordnet und/oder mit dieser verbunden, derart, dass der Trägerrahmen die Abschlüsse ausbildet und/oder bereitstellt und/oder unterstützt.

Es kann in Verfahrensschritt 101 vorgesehen sein, dass das Bereitstellen des Trägerrahmens ein Bereitstellen einer Kunststofffolie umfasst, mittels derer die Abschlüsse zumindest teilweise ausgebildet werden.

Es kann in Verfahrensschritt 102 vorgesehen sein, dass die Kunststofffolie und der Flussrahmen im Bereich der jeweiligen Abschlüsse und/oder benachbart hierzu an die Elektrode angelegt wird und/oder wobei die Kunststofffolie dort die Elektrode zumindest einseitig umgreifend angeordnet wird. Insbesondere kann der anliegende und/oder umgreifende Teil der Kunststofffolie und des Flussrahmens mit der Elektrode verklebt und/oder stoffschlüssig verbunden werden, beispielsweise mit Hilfe eines geeigneten Klebers. Dies kann insbesondere im Bereich der Abschlüsse und/oder benachbart hierzu erfolgen.

Es kann in Verfahrensschritt 101 vorgesehen sein, dass das Bereitstellen der Kunststofffolie ein Stanzen oder ein Lasern der Kunststofffolie umfasst. Als Ergebnis wird dann beispielsweise ein Trägerrahmen erhalten, wie dieser in der Fig. 4 beispielhaft gezeigt ist.

Es kann in Verfahrensschritt 101 vorgesehen sein, dass das Bereitstellen der Kunststofffolie ein Einbringen von jeweils mindestens einem Perforationsabschnitt für jeden der Abschlüsse umfasst. Die Perforationsabschnitte können beispielsweise Perforationslinien umfassen. Das Einbringen der Perforationsabschnitte kann beispielsweise mittels des Stanzens oder des Laserns erfolgen.

Es kann in Verfahrensschritt 101 vorgesehen sein, dass der Trägerrahmen derart bereitgestellt wird, dass der Trägerrahmen in den Bereichen der Einlasskanäle und Auslasskanäle Stege mit in die Kanäle hineinragenden Abstandshaltern aufweist, wobei die Abstandshalter in Verfahrensschritt 102 in den Kanälen angeordnet werden. Es kann insbesondere vorgesehen sein, dass das Bereitstellen der Kunststofffolie ein Stanzen der Stege und von Abschnitten zum Ausbilden der Abstandshalter umfasst. Es kann weiter vorgesehen sein, dass das Bereitstellen der Kunststofffolie ein Einbringen von jeweils mindestens einem Perforationsabschnitt für jeden der Abstandshalter umfasst. Die Perforationsabschnitte können beispielsweise Perforationslinien umfassen.

Der Verfahrensschritt 101 kann insbesondere ein Falzen entlang der Perforationsabschnitte, insbesondere entlang der Perforationslinien, umfassen, um Abschlüsse und/oder die Abstandshalter durch Abwinkeln der Kunststofffolie auszubilden bzw. in Position zu bringen.

In einem Verfahrensschritt 103 kann die Elektrodenanordnung in einer Redox-Fluss-Zelle, insbesondere zwischen einer Monopolar- oder Bipolarplatte und einer Membran, angeordnet werden. Hierbei wird die Elektrodenanordnung insbesondere auch an einem Flussrahmen angeordnet, sodass eine Zu- und Abführung von Elektrolytflüssigkeit über Verteilkanäle zu bzw. von der Elektrode erfolgen kann.

### Bezugszeichenliste

- 1: Elektrodenanordnung
- 2: Elektrode
- 3: Trägerrahmen
- 3-1: Kunststofffolie
- 4: Einlasskanal
- 5: Einlassende
- 6: Auslasskanal
- 7: Auslassende
- 8: gegenüberliegendes Ende (Einlassende)
- 9: flüssigkeitsdichter Abschluss
- 10: gegenüberliegendes Ende (Auslassende)
- 11: flüssigkeitsdichter Abschluss
- 12: Loch
- 13: Membran
- 14: Monopolar- oder Bipolarplatte
- 15: Flussrahmen
- 16: Dichtung
- 17: Perforationsabschnitt (Abschluss)
- 17-1: Perforationslinie
- 18: Steg
- 19: Abstandshalter
- 20: Perforationsabschnitt (Abstandshalter)
- 20-1: Perforationslinie
- 21: Außenseite
- 22: Verteilkanal (Elektrolytflüssigkeit)
- 23: Stirnseite (Elektrode)
- 100-103: Verfahrensschritte

## Patentansprüche

1. Elektrodenanordnung (1) für eine Redox-Fluss-Zelle, umfassend:
- eine Elektrode (2) aus porösem Elektrodenmaterial mit mindestens einem Einlasskanal (4) mit einem Einlassende (5) und mindestens einem Auslasskanal (6) mit einem Auslassende (7), wobei die Kanäle (4,6) abwechselnd mit Abstand zueinander angeordnet sind,
wobei der mindestens eine Einlasskanal (4) an dem Einlassende (5) in die Elektrode (2) hineinführt und wobei der mindestens eine Auslasskanal (6) an dem Auslassende (7) aus der Elektrode (2) herausführt,
wobei der mindestens eine Einlasskanal (4) an einem dem Einlassende (5) gegenüberliegenden Ende (8) und der mindestens eine Auslasskanal (6) an einem dem Auslassende (7) gegenüberliegenden Ende (10) durch flüssigkeitsdichte Abschlüsse (9,11) geschlossen sind, und
- einen Trägerrahmen (3), der eingerichtet ist zum Halten der Elektrode (2), wobei der Trägerrahmen (3) die Abschlüsse (9,11) ausbildet und/oder bereitstellt und/oder unterstützt.

2. Elektrodenanordnung (1) nach Anspruch 1, **dadurch gekennzeichnet, dass** der Trägerrahmen (3) eine Kunststofffolie (3-1) umfasst, wobei die Kunststofffolie (3-1) die Abschlüsse (9,11) zumindest teilweise ausbildet.

3. Elektrodenanordnung (1) nach Anspruch 2, **dadurch gekennzeichnet, dass** die Kunststofffolie (3-1) zum Ausbilden der Abschlüsse (9,11) im Bereich der jeweiligen Abschlüsse (9,11) und/oder benachbart hierzu an der Elektrode (2) anliegt und/oder die Elektrode (2) dort zumindest einseitig umgreift.

4. Elektrodenanordnung (1) nach einem der Ansprüche 2 oder 3, **dadurch gekennzeichnet, dass** die Kunststofffolie (3-1) für jeden der Abschlüsse (9,11) jeweils mindestens einen Perforationsabschnitt (17) aufweist.

5. Elektrodenanordnung (1) nach einem der vorangegangenen Ansprüche, **dadurch gekennzeichnet, dass** der Trägerrahmen (3) im Bereich des jeweiligen Abschlusses (9,11) und/oder benachbart hierzu mit der Elektrode (2) verklebt und/oder stoffschlüssig verbunden ist.

6. Elektrodenanordnung (1) nach einem der vorangegangenen Ansprüche, **dadurch gekennzeichnet, dass** der Trägerrahmen (3) in den Bereichen des mindestens einen Einlasskanals (4) und des mindestens einen Auslasskanals (6) Stege (18) mit in die Kanäle (4,6) hineinragenden Abstandshaltern (19) aufweist.

7. Elektrodenanordnung (1) nach einem der Ansprüche 2 bis 6, **dadurch gekennzeichnet, dass** die Stege (18) und die Abstandshalter (19) durch Abschnitte der Kunststofffolie (3-1) ausgebildet sind.

8. Elektrodenanordnung (1) nach Anspruch 7, **dadurch gekennzeichnet, dass** die Kunststofffolie (3-1) zum Ausbilden der Abstandshalter (19) jeweils mindestens einen Perforationsabschnitt (20) aufweist.

9. Redox-Fluss-Zelle, umfassend mindestens eine Elektrodenanordnung (1) nach einem der vorangegangenen Ansprüche.

10. Verfahren zum Herstellen einer Elektrodenanordnung (1) für eine Redox-Fluss-Zelle,
wobei eine Elektrode (2) aus porösem Elektrodenmaterial mit mindestens einem Einlasskanal (4) mit einem Einlassende (5) und mindestens einem Auslasskanal (6) mit einem Auslassende (7) ausgebildet oder bereitgestellt wird, derart, dass die Kanäle (4,6) abwechselnd mit Abstand zueinander angeordnet sind und der mindestens eine Einlasskanal (4) an dem Einlassende (5) in die Elektrode (2) hineinführt und der mindestens eine Auslasskanal (6) an dem Auslassende (7) aus der Elektrode (2) herausführt,
wobei der mindestens eine Einlasskanal (4) an einem dem Einlassende (5) gegenüberliegenden Ende (8) und der mindestens eine Auslasskanal (6) an einem dem Auslassende (7) gegenüberliegenden Ende (10) durch flüssigkeitsdichte Abschlüsse (9,11) verschlossen werden,
wobei ein Trägerrahmen (3) bereitgestellt wird,
wobei der Trägerrahmen (3) an der Elektrode (2) angeordnet und/oder mit dieser verbunden wird, derart, dass der Trägerrahmen (3) die Abschlüsse (9,11) ausbildet und/oder bereitstellt und/oder unterstützt.

11. Verfahren nach Anspruch 10, **dadurch gekennzeichnet, dass** das Bereitstellen des Trägerrahmens (3) ein Bereitstellen einer Kunststofffolie (3-1) umfasst, mittels derer die Abschlüsse (9,11) zumindest teilweise ausgebildet werden.

12. Verfahren nach Anspruch 11, **dadurch gekennzeichnet, dass** die Kunststofffolie (3-1) im Bereich der jeweiligen Abschlüsse (9,11) und/oder benachbart hierzu an die Elektrode (2) angelegt wird und/oder wobei die Kunststofffolie (3-1) dort die Elektrode (2) zumindest einseitig umgreifend angeordnet wird.

13. Verfahren nach einem der Ansprüche 11 oder 12, **dadurch gekennzeichnet, dass** das Bereitstellen der Kunststofffolie (3-1) ein Stanzen oder ein Lasern der Kunststofffolie (3-1) umfasst.

14. Verfahren nach einem der Ansprüche 11 bis 13, **dadurch gekennzeichnet, dass** das Bereitstellen der Kunststofffolie (3-1) ein Einbringen von jeweils mindestens einem Perforationsabschnitt (17) für jeden der Abschlüsse (9,11) umfasst.

15. Verfahren nach einem der Ansprüche 10 bis 14, **dadurch gekennzeichnet, dass** der Trägerrahmen (3) zum Ausbilden der Abschlüsse (9,11) im Bereich der Abschlüsse (9,11) und/oder benachbart hierzu mit der Elektrode (2) verklebt und/oder mit dieser stoffschlüssig verbunden wird.

16. Verfahren nach einem der Ansprüche 10 bis 15, **dadurch gekennzeichnet, dass** der Trägerrahmen (3) derart bereitgestellt wird, dass der Trägerrahmen (3) in den Bereichen des mindestens einen Einlasskanals (4) und des mindestens einen Auslasskanals (6) Stege (18) mit in die Kanäle (4,6) hineinragenden Abstandshaltern (19) aufweist, wobei die Abstandshalter (19) in den Kanälen (4,6) angeordnet werden.

17. Verfahren nach Anspruch 16, **dadurch gekennzeichnet, dass** das Bereitstellen der Kunststofffolie (3-1) ein Stanzen oder ein Lasern der Stege (18) und von Abschnitten zum Ausbilden der Abstandshalter (19) umfasst.

18. Verfahren nach einem der Ansprüche 16 oder 17, **dadurch gekennzeichnet, dass** das Bereitstellen der Kunststofffolie (3-1) ein Einbringen von jeweils mindestens einem Perforationsabschnitt (20) für jeden der Abstandshalter (19) umfasst.
